Europäisches Patentamt

European Patent Office

Office européen des brevets

(19)

(11) EP 0 407 903 B1

(12) EUROPÄISCHE PATENTSCHRIFT

(45) Veröffentlichungstag und Bekanntmachung des Hinweises auf die Patenterteilung:
21.02.1996 Patentblatt 1996/08

(51) Int Cl.⁶: H04L 7/04, H03M 13/00

(21) Anmeldenummer: 90112908.0

(22) Anmeldetag: 06.07.1990

(54) **Zeitmultiplex-Nachrichtenübertragungssystem mit einer auf die Codierung von in die übertragene Nachricht eingefügten Wörtern ansprechenden empfangsseitigen Synchronisierschaltung**

TDM information transmission system with a synchronising circuit at the receiver responding the coding of words inserted in the transmitted information

Système de transmission d'information MIC avec un dispositif de synchronisation du récepteur répondant aux mots insérés dans l'information transmise

(84) Benannte Vertragsstaaten:
AT BE CH DE DK ES FR GB IT LI NL SE

(30) Priorität: 08.07.1989 DE 3922486

(43) Veröffentlichungstag der Anmeldung:
16.01.1991 Patentblatt 1991/03

(73) Patentinhaber: Alcatel SEL Aktiengesellschaft
D-70435 Stuttgart (DE)

(72) Erfinder: Weis, Bernd X., Dr.
D-7015 Korntal (DE)

(74) Vertreter: Kugler, Hermann, Dipl.-Phys. et al
D-70449 Stuttgart (DE)

(56) Entgegenhaltungen:
DE-A- 3 707 143        DE-A- 3 735 377
US-A- 3 678 469        US-A- 3 961 311
US-A- 4 755 993

**Beschreibung**

Die Erfindung betrifft ein System nach dem Oberbegriff des Patentanspruchs 1. Ein solches System ist bekannt aus der DE-A-37 35 377.

Bei diesem System wird sendeseitig aus einer bestimmten Information, dort "Kopf" genannt, die eine logische Kanalnummer enthält, ein sogenanntes "Codewort" abgeleitet und im Anschluß an die Information übertragen. In der üblichen Fachsprache ausgedrückt, wird also aus der Information (K) durch Codierung in einem linearen Blockcode ein Codewort gebildet, dessen Bitanzahl gleich der Bitanzahl der Information (K) vermehrt um die Anzahl der hinzugefügten Bits (dort "Codewort CW" genannt) ist. Die Bitanzahl des aus der Information (K) mit k Bits und den hinzugefügten Bits bestehenden Codeworts wird im folgenden mit n bezeichnet. Solche Codewörter werden bei dem bekannten System in die zu übertragende Bitfolge in regelmäßigen Zeitabständen eingefügt, nämlich jeweils am Anfang eines sogenannten Paketes. Auf der Empfangsseite enthält das bekannte System eine Prüfeinrichtung, die in der empfangenen Bitfolge die n-Bit-Codewörter sucht. Dies tut sie, indem sie aus der empfangenen Bitfolge eine Folge von k Bits auswählt und überprüft, ob diese zusammen mit den nachfolgend empfangenen n-k Bits (n-k ist die Anzahl der sendeseitig der Information K hinzugefügten Bits) ein Codewort darstellen, das in dem Blockcode codiert ist. Stellt die Prüfeinrichtung fest, daß die überprüfte Bitfolge nicht in dem Blockcode codiert ist, so bricht sie die Suche nach dem Codewort in dem gerade vorliegenden Paket ab und setzt sie erst im nächsten Paket fort, wobei sie dann im nächsten Paket eine Bitfolge zur Überprüfung auswählt, die bezogen auf den Paketanfang um ein Bit versetzt beginnt als die im zuvor geprüften Paket ausgewählte Bitfolge.

Dies bedeutet, daß eine beträchtlich lange Zeit vergehen kann, bis in irgendeinem Paket das gesuchte n-Bit-Wort gefunden ist. Dies hat wiederum den Nachteil, daß die Synchronisation des Empfängers auf den Sender lange dauert und dadurch erhebliche Informationsverluste auftreten.

Es ist daher die Aufgabe, ein Zeitmultiplex-Nachrichtenübertragungssystem der genannten Art anzugeben, deren empfangsseitige Synchronisationseinrichtung die n-Bit-Wörter schneller findet und damit eine schnellere Synchronisation gewährleistet.

Die Aufgabe wird wie im Patentanspruch 1 angegeben gelöst. Ausgestaltungen der Lösung sind den Unteransprüchen zu entnehmen.

Abgesehen von dem schnellen Auffinden der in dem Blockcode vorliegenden n-Bit-Wörter hat die Erfindung den Vorteil, daß sämtliche Teile der gesamten Prüfschaltung keinen höheren Verarbeitungstakt erfordern als es durch den Bittakt der empfangenen Bitfolge vorgegeben ist. Daher kann die Prüfeinrichtung auch bei einer hohen Bitfolgefrequenz von 150 Mbit/s in der Technologie CMOS und damit mit geringen Kosten realisiert werden.

Jede Schaltung, die mit höheren Taktfrequenzen arbeitete, könnte nur in einer teueren Technologie, z.B. ECL, realisiert werden.

Bevor die Erfindung anhand der Zeichnungen beschrieben wird, wird kurz erläutert, welche Art einer mathematischen Überprüfung angewendet wird, um festzustellen, ob die Bitgruppe in dem linearen Blockcode codiert ist. Ein Solcher Blockcode wird üblicherweise als (n,k)-Blockcode bezeichnet, wobei n die Gesamtanzahl der Bits pro Block und k die Anzahl der Informationsbits pro Block sind.

Gemäß der Erfindung (Anspruch 2) erfolgt das Überprüfen einer n-Bit-Bitgruppe daraufhin, ob sie in dem linearen Blockcode codiert ist, durch Berechnung des Syndroms aufgrund der Paritätsprüfmatrix des verwendeten linearen Blockcodes. Dies ist bei der eingangs genannten bekannten Prüfeinrichtung nicht der Fall. Bekanntlich ist das Syndrom, im folgenden mit S bezeichnet, ein Vektor der Dimension n-k und wird durch Multiplikation der Transponierten der Paritätsprüfmatrix H des Blockcodes mit dem empfangenen Block, der im folgenden mit X bezeichnet wird, berechnet. Weitere Einzelheiten hierzu sind dem Buch von W. W. Peterson "Error-Correcting Codes ", Massachusetts Institute of Technology and John Willey & Sons, Inc., New York, London 1961, S.30-S.36 entnehmbar.

Die i-te-Komponente des Syndroms ist aus einem Block mit n-Bits und der Transponierten der Paritätsprüfmatrix als das skalare Produkt der i-ten Zeile $h_i$ mit dem empfangenen Block X zu berechnen d.h.

$$S_i = h_i X = h_{i1} X_1 + h_{i2} X_2 + h_{i3} X_3 + \ldots h_{in} X_n.$$

Diese Komponenten des Vektors S berechnet die erfindungsgemäße Prüfschaltung für jede n-Bit-Bitgruppe, die mit einem der aufeinanderfolgend empfangenen Bits beginnt, also, für das erste Bit der Bitfolge und dessen n -1 nachfolgende Bits, einen Bit-Takt später für das zweite Bit der empfangenen Bitfolge und dessen n -1 nachfolgende Bits u.s.w.

Die Berechnung des Syndroms wird üblicherweise zur Fehlererkennung verwendet, wobei ein bestimmtes Datenwort daraufhin untersucht wird, ob es einen Codefehler enthält, so z.B. in der DE-A-37 07 143. Die Syndromberechnung wird dort nicht verwendet, um herauszufinden, an welcher Stelle eine mit hoher Bitfolgefrequenz übertragene Bitfolge ein in dem Blockcode codiertes Wort enthält. Die Realisierung der aus dieser Schrift bekannten Schaltung zur Syndromberechnung wäre für den vorliegenden Anwendungsfall auch ungeeignet, da sie Speicher verwendet, in denen Teilsyndrome gespeichert sind und da eine solche Schaltung wegen der Speicherzugriffzeiten und wegen der den Speichern nachgeschalteten EXCLUSIV-ODER-Schaltungen eine für den vorliegenden Anwendungsfall zu hohe Verarbeitungszeit erfordert.

Anhand der Zeichnungen wird nachstehend erläutert, auf welche Weise erfindungsgemäß die Berechnung und Überprüfung des Syndroms S für jede mit einem Bit der empfangenen Bitfolge beginnende n-Bit-Bitgruppe durchgeführt wird.

Die Erfindung wird nun anhand der Zeichnungen beispielsweise näher erläutert. Es zeigen

Fig. 1 ein Blockschaltbild der empfangsseitigen Prüfeinrichtung des erfindungsgemäßen Systems,

Fig. 2 ein Ausführungsbeispiel eines der in Fig.1 gezeigten Netzwerke $N_1$ bis $N_{n-k}$,

Fig. 3 die Logikschaltung eines der Elemente $E_1$ aus Fig.2 und

Fig. 4 die Logikschaltung eines der in Fig.2 gezeigten Elemtente $E_2$.

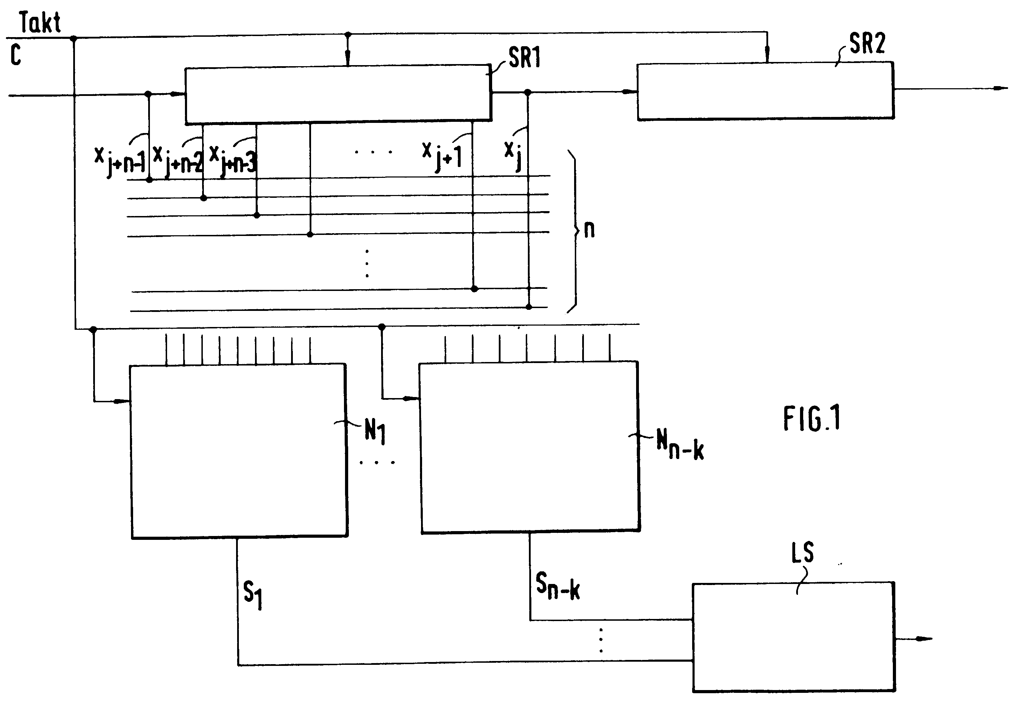

In der Prüfeinrichtung nach Fig.1 gelangt die empfangene Bitfolge auf den Serieneingang eines Schieberegisters SR1, das eine Länge von n-1, d.h. n-1 hintereinander geschaltete Flip-Flops, hat wenn das zu findende Codewort n Bits hat. Ein solches Schieberegister hat n-2 Parallelausgänge, so daß es n aufeinanderfolgend empfangene Bits der Bitfolge parallel für irgendeine weitere Verarbeitung bereitstellt. Bezeichnet man das zu irgendeinem definierten Zeitpunkt am Ausgang des Schieberegisters SR1 auftretende Bit mit $X_j$, so erscheinen wie in der Zeichnung gezeigt die weiteren Bits der mit dem Bit $x_j$ beginnenden n-Bit-Bitgruppe gleichzeitig an den Parallelausgängen des Schieberegisters und sind dort mit $x_{j+1}$ bis $x_{j+n-2}$ bezeichnet und am Eingang des Schieberegisters SR1, wobei das am Eingang des Schieberegisters erscheinende Bit $x_{j+n-1}$ bezeichnet ist. Da das Schieberegister mit einem Takt C betrieben wird, der gleich dem Takt der empfangenen Bitfolge ist, stellt es in der darauffolgenden Bittaktperiode das mit dem Bit $x_{j+1}$ beginnende n-Bit-Wort zur Verarbeitung bereit.

Die jeweils in irgendeiner Bitperiode der empfangenen Bitfolge vom Schieberegister SR1 zur Verarbeitung bereitgestellte n-Bit-Bitgruppe gelangt parallel auf eine mit n bezeichnete Busleitung, von der jeweils ausgewählte Leitungen mit Eingängen von parallel angeordneten und parallel betriebenen Netzwerken $N_1$ bis $N_{n-k}$ verbunden sind. Es ist für jede wie oben angegeben zu berechnende Komponente $S_i$ des Syndroms genau ein Netzwerk vorhanden, also n-k Netzwerke, da das Syndrom, wie oben erwähnt n-k Komponenten hat.

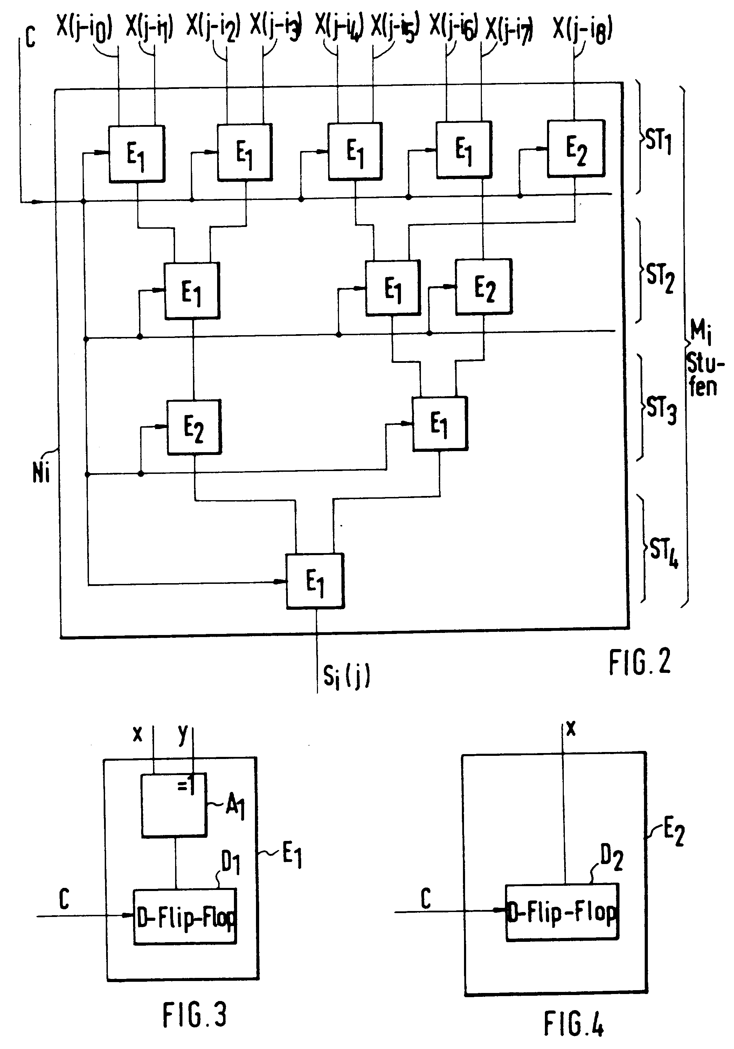

Von den n Bits der zu überprüfenden n-Bit-Bitgruppe werden in ein Netzwerk $N_i$ nur diejenigen der n Bits der n-Bit-Bitgruppe eingegeben, für die der zugehörige Wert $h_{il}$ von Null verschieden ist (obige Gleichung für $S_i$). In obiger Gleichung für $S_i$ bedeutet dies beispielsweise, daß in das Netzwerk $N_i$, das die Komponente $S_i$ des Syndroms berechnet, wenn die Werte $h_{i2}$ und $h_{i3}$ gleich Null sind, nur das erste Bit, das vierte und die weiteren Bits der n-Bit-Bitgruppe eingegeben werden und die an zweiter und dritter Stelle einer n-Bit-Bitgruppe erscheinenden Bits, gleichgültig welchen Binärwert sie darstellen, immer weggelassen werden. Auf diese Weise wird für jede Komponente des Syndroms abhängig von der Paritätsprüfmatrix eine bestimmte Auswahl aus den n Bits einer zu untersuchenden n-Bit-Bitgruppe in jedes der n-k Netzwerke $N_1$ bis $N_{n-k}$ eingegeben. Die Netzwerke berechnen nun in mehreren Stufen gemäß der obigen Gleichung für $S_i$ ihre Komponente des Syndroms, wobei sie, wie anhand von Fig.2 noch erläutert wird, ihre Komponenten $S_i$ des Syndroms an ihren mit $S_1$ bis $S_{n-k}$ bezeichneten Ausgängen gleichzeitig ausgeben.

Da bekanntlich die $h_{il}$ der Paritätsprüfmatrix nur die Werte 0 oder 1 haben können und die in der obigen Gleichung angegebenen Additionen Modulo-2-Additionen sind, besteht die durchzuführende Berechnung in einer mehrfachen EXCLUSIV-ODER-Verknüpfung der Eingangsbits, was bekanntlich bei Vorliegen einer ungeraden Anzahl von Einsen eine 1 und bei einer geraden Anzahl von Einsen eine 0 als Syndromkomponente ergibt.

Die in mehreren Stufen erfolgende Verknüpfung der Eingangsbits eines der Netzwerke wird im Takt C der empfangenen Bitfolge durchgeführt. Nach einer bestimmten Anzahl von Taktperioden dieses Takts liegt an den Ausgängen der Netzwerke für die gerade untersuchte n-Bit-Bitgruppe das Syndrom vor, dessen Bits eine Logikschaltung LS durchlaufen, die ein Ausgangssignal abgibt, wenn das Syndrom gleich Null ist (alle Komponenten) und dadurch die Erkennung eines n-Bit-Codeworts anzeigt. Vom Ausgang des Schieberegisters SR1 gelangt die Bitfolge auf den Serieneingang eines Schieberegisters SR2, das ebenfalls im Takt der Bitfolge betrieben wird und die Bitfolge so lange verzögert, bis die Netzwerke $N_i$ das Syndrom für eine mit dem Bit $X_j$ beginnende n-Bit-Bitgruppe berechnet haben. Somit erscheint am Ausgang von SR2 das erste Bit einer Bitgruppe genau dann, wenn für diese Bitgruppe die Logikschaltung LS an ihrem Ausgang angibt, ob die Bitgruppe ein Codewort ist oder nicht. Die Logikschaltung LS arbeitet ohne erhebliche Verzögerung. Falls ihre Verzögerung doch zu groß sein sollte, kann sie durch eine entsprechende Verlängerung des Schieberegisters SR2 kompensiert werden.

Der Vorteil der soweit beschriebenen Prüfeinrichtung liegt darin, daß sie ohne jegliche Verzögerung die empfangene Bitfolge Bit für Bit überprüft und dabei keinen Verarbeitungstakt erfordert, der höher als der Bittakt ist.

Anhand von Fig.2 wird nun ein Ausführungsbeispiel für eines der Netzwerke $N_i$ der Fig.1 erläutert. Es handelt sich bei Fig.2 um ein Netzwerk $N_i$ zum Berechnen einer Komponente $S_i(j)$ aus einer mit einem Bit $X_j$ beginnenden Bitgruppe. In dem Beispiel ist davon ausgegangen, daß neun von den n Bits der zu untersuchenden mit dem Bit $X_j$ beginnenden n-Bit-Bitgruppe zur Berechnung der Komponente $S_i(j)$ des Syndroms zu benutzen sind (für die anderen Bits sind die zugehörigen $h_{il}$ gleich 0). Die für die Berechnung zu benutzenden Bits sind an den parallelen Eingängen von $N_i$ mit $X(j-i_0)$ bis $X(j-i_8)$ bezeichnet.

In einer Stufe $ST_1$ von $N_i$ werden die durch Modulo-2-Additionen zu summierenden Eingangsbits zu beliebigen Paaren zusammengefaßt, wobei jedes Bit nur in einem Paar auftreten darf. Es gibt also im gezeigten Beispiel vier Paare und ein übrig bleibendes Bit, da die Anzahl von Bits ungeradzahlig ist. Die Paare von Bits werden jeweils in einem von Netzwerkelementen eines ersten Typs $E_1$ in einer ersten Taktperiode Modulo-2 addiert und bis zur nächsten Taktperiode zwischengespeichert. Das übrig bleibende Bit wird in einem Netzwerkelement eines zweiten Typs $E_2$ bis zur nächsten Taktperiode zwischengespeichert.

Die Funktion der Elemente vom Typ $E_1$ und vom Typ $E_2$ ist in Fig. 3 und in Fig. 4 gezeigt. Ein Element $E_1$ enthält eine ANTIVALENZ-Schaltung $A_1$, die zwei Eingangsbits, die an Eingängen x und y eingegeben werden, durch eine EXKLUSIV-ODER-Verknüpfung (=ANTIVALENZ-Verknüpfung) verknüpft, d.h. Modulo-2 addiert und ein nachgeschaltetes D-Flip-Flop $D_1$, welches das Ergebnis bis zum Erscheinen des nächsten Taktimpulses zwischenspeichert. Das D-Flip-Flop wird gesteuert von dem in Fig. 1 und Fig. 2 gezeigten Bittakt C der empfangenen Bitfolge. Ein Element $E_2$ dient dazu, ein an seinem Eingang X eingegebenes einzelnes Bit in einen D-Flip-Flop D2 bis zum nächsten Taktimpuls zwischenzuspeichern. Es wird ebenfalls von dem Takt C gesteuert.

Nachdem in der Stufe $ST_1$ von $N_i$ in einer ersten Taktperiode die Eingangsbits von $N_i$ paarweise verknüpft, die Ergebnisse zwischengespeichert und das übrig bleibende Eingangsbit ebenfalls zwischengespeichert ist, werden mit dem nächsten Taktimpuls die zwischengespeicherten Ergebnisse bzw. das zwischengespeicherte übriggebliebene Bit der Stufe $ST_1$ in entsprechender Weise in einer Stufe $ST_2$ verarbeitet, indem wieder die Eingangsbits paarweise durch Elemente $E_1$ miteinander verknüpft werden und das übrig gebliebene Bit mit einem Element $E_2$ zwischengespeichert wird. Mit dem darauffolgenden Taktimpuls geschieht mit den Ergebnissen der Stufe $ST_2$ das Entsprechende in einer Stufe $ST_3$, und mit einem weiteren Taktimpuls berechnet schließlich eine letzte Stufe $ST_4$ mit einem Element $E_1$ aus den Ergebnissen der Stufe $ST_3$ das Ergebnisbit, d.h. die Komponente $S_i(j)$ des Syndroms. Im gezeigten Beispiel mit neun Eingängen werden dazu vier Stufen gebraucht, so daß vier Bit-Takt-Perioden, nachdem am Ausgang des Schieberegisters SR1 von Fig. 1 das erste Bit $X_j$ einer mit diesem Bit beginnenden n-Bit-Bitgruppe aufgetreten ist, das Netzwerk $N_i$ die Komponente $S_i(j)$ des Syndroms dieser Bitgruppe berechnet hat.

Jedes der Netzwerke $N_1$ bis $N_{n-k}$ hat eine individuelle Anzahl von zu verknüpfenden Eingangsbits und entsprechend eine individuelle Anzahl $M_i$ von dazu erforderlichen Stufen. Damit das gesamte Syndrom S(j) einer mit dem Bit $X_j$ beginnenden n-Bit-Bitgruppe an den Ausgängen der Netzwerke $N_i$ gleichzeitig erscheint, haben diejenigen Netzwerke, deren erforderliche Stufenanzahl $M_i$ kleiner ist als das größte in einem der Netzwerke vorkommende $M_i$, zusätzlich zu den erforderlichen Stufen weitere Stufen mit Elementen des Typs $E_2$, so daß schließlich alle Netzwerke zum gleichen Zeitpunkt ihre Komponente $S_i(j)$ des Syndroms S(j) an ihren Ausgängen bereitstellen.

Dieser Zeitpunkt ist um M Bittaktperioden später als der Zeitpunkt des Auftretens von $X_j$ am Ausgang des Schieberegisters SR1 von Fig. 1, wobei M die maximale Anzahl der in einem der Netzwerke $N_i$ erforderlichen Stufen ist. Die im Zusammenhang mit Fig. 1 erwähnte Verzögerungsdauer des Schieberegisters SR2 beträgt also M Bittaktperioden. Damit verzögert das Schieberegister SR2 die Bitfolge so lange, bis für eine bestimmte Bitgruppe entschieden ist, ob sie ein Codewort ist oder nicht.

Zu ergänzen ist noch, daß statt eines Schieberegisters $SR_1$ auch irgend eine andere Speicherschaltung verwendet werden kann, um die zu überprüfenden n-Bit-Bitgruppen bereitzustellen. Dies kann auch ein Speicher sein, in dem die Bits einer empfangenen Bitfolge in einer anderen als einer seriellen Anordnung gespeichert sind, sofern es nur möglich ist, aufeinanderfolgend empfangene Bits gleichzeitig als eine n-Bit-Bitgruppe auszugeben.

Zur Optimierung der Schaltung können die Netzwerke $N_i$ auch untereinander verknüpft werden, indem Zwischenergebnisse eines Netzwerkes in ein anderes übertragen werden, so daß insgesamt Schaltungselemente gespart werden.

**Patentansprüche**

1. Zeitmultiplex-Nachrichtenübertragungssystem mit einer Sendeeinrichtung, die in die zu übertragende Bitfolge regelmäßig ein n-Bit-Wort, das in einem linearen Blockcode codiert ist, einfügt und mit einer empfangsseitigen Prüfeinrichtung, die in der empfangenen Bitfolge das n-Bit-Wort sucht, indem sie Bitgruppen mit n aufeinanderfolgenden Bits daraufhin überprüft, ob sie in dem Blockcode codiert sind, **dadurch gekennzeichnet**, daß die Prüfeinrichtung (SR1, SR2, $N_1$ bis $N_{n-k}$, LS) alle mit einem ($X_j$) der aufeinanderfolgenden Bits der empfangenen Bitfolge beginnenden n-Bit-Bitgruppen ($x_j$ bis $X_{j+n-1}$) nacheinander überprüft.

2. System nach Anspruch 1, dadurch gekennzeichnet, daß die Prüfeinrichtung für jede zu überprüfende n-Bit-Bitgruppe aufgrund der Paritätsprüfmatrix des verwendeten linearen Blockcodes das Syndrom ($S_1$ bis $S_{n-k}$) berechnet und, falls das Syndrom gleich Null ist, ein das Vorliegen eines der n-Bit-Wörter anzeigendes Signal abgibt.

3. System nach Anspruch 2, dadurch gekennzeichnet, daß die Prüfeinrichtung enthält:

- für jede Komponente ($S_i$) des Syndroms ($S_1$ bis $S_{n-k}$) ein Netzwerk ($N_i$), das aus der zu überprüften n-Bit-Bitgruppe ($x_j$ bis $X_{j+n-1}$) eine Komponente ($S_i$) des Syndroms ($S_1$ bis $S_{n-k}$) berech-

net,

- eine Logigschaltung (LS), die aufgrund der berechneten Komponenten des Syndroms ($S_1$ bis $S_{n-k}$) feststellt, ob das Syndrom gleich Null ist, und

- eine Verzögerungsschaltung (SR2), die die empfangene Bitfolge solange verzögert, bis die überprüfung einer n-Bit-Bitgruppe beendet ist.

4. System nach Anspruch 3, dadurch gekennzeichnet, daß die Verarbeitung innerhalb der gesamten Prüfeinrichtung im Bittakt (C) der empfangenen Bitfolge stattfindet.

5. System nach Anspruch 4, dadurch gekennzeichnet, daß in der Prüfeinrichtung eine zu überprüfende n-Bit-Bitgruppe ($x_j$ bis $x_{j+n-1}$) gleichzeitig und parallel in jedes der Netzwerke ($N_i$) eingegeben wird, daß jedes Netzwerk durch EXCLUSIV-ODER-Verknüpfungen seiner Eingangsbits gemäß der Paritätsprüfmatrix in mehreren aufeinanderfolgenden Stufen seine Komponente ($S_i$) des Syndroms ($S_1$ bis $S_{n-k}$) berechnet.

6. System nach Anspruch 5, dadurch gekennzeichnet, daß die empfangene Bitfolge ein (n-1)-Bit-Schieberegister (SR1) durchläuft, das mit jedem Impuls des Bittakts (C) eine zu überprüfende n-Bit-Bitgruppe ($x_j$ bis $x_{j+n-1}$) für die Netzwerke ($N_1$ bis $N_{n-k}$) bereitstellt.

7. System nach Anspruch 6, dadurch gekennzeichnet, daß in jedes Netzwerk ($N_i$) nur diejenigen Bits der n-Bit-Bitgruppe ($x_j$ bis $x_{j+n-1}$) eingegeben werden, für die die in dem Netzwerk ($N_i$) anzuwendenden zugehörigen Komponenten der Paritätsprüfmatrix ungleich Null sind.

8. System nach Anspruch 7, dadurch gekennzeichnet, daß die Netzwerke ($N_i$), deren erforderliche Anzahl ($M_i$) von Stufen ($ST_1$ bis $ST_4$) geringer ist als die maximale in einem der Netzwerke erforderliche Anzahl von Stufen, zusätzlich zu den erforderlichen Stufen weitere Stufen mit Verzögerungselementen ($E_2$) haben, so daß alle Netzwerke ($N_1$ bis $N_{n-k}$) ihre Komponente ($S_i$) des Syndroms ($S_1$ bis $S_{n-k}$) gleichzeitig an ihren Ausgängen bereitstellen.

**Claims**

1. Time-division multiplex communication system comprising a transmitting device which regularly inserts an n-bit word coded in a linear block code into the bit sequence to be transmitted, and a checking device at the receiving end which looks for the n-bit word in the received bit sequence by checking groups of n successive bits as to whether they are coded in the block code,

**characterized in**

that the checking device ($SR_1$, SR2, $N_1$ to $N_{n-k}$, LS) successively checks all n-bit bit groups ($x_i$ to $x_{j+n-1}$) which begin with any one ($x_j$) of the successive bits of the received bit sequence.

2. A system as claimed in claim 1, characterized in that the checking device calculates the syndrome ($S_1$ to $S_{n-k}$) for each of the n-bit bit groups on the basis of the parity check matrix of the linear block code used and, if the syndrome iszero, provides a signal indicating the presence of one of the n-hit words.

3. A system as claimed in claim 2, characterized in that the checking device contains

- a network ($N_i$) for each component ($S_i$) of the syndrome ($S_1$ to $S_{n-k}$) which calculates one component ($S_i$) of the syndrome ($S_1$ to $S_{n-k}$) from the n-bit bit group ($X_j$ to $X_{j+n-1}$) to be checked,

- a logic (LS) which determines from the calculated components of the syndrome ($S_1$ to $S_{n-k}$) whether the syndrome is zero, and

- a delay circuit (SR2) which delays the received bit sequence until the check of an n-bit bit group is completed.

4. A system as claimed in claim 3, characterized in that the processing within the checking device takes place at the bit rate (C) of the received bit sequence.

5. A system as claimed in claim 4, characterized in that in the checking device, an n-bit bit group ($x_j$ to $x_{j+n-1}$) to be checked is fed into each of the networks ($N_i$) in parallel, and that each of the networks calculates its component ($S_i$) of the syndrome ($S_1$ to $S_{n-k}$) in several successive stages by exclusive-0Ring its input bits in accordance with the parity check matrix.

6. A system as claimed in claim 5, characterized in that the received bit sequence passes through an (n-1)-bit shift register (SR1) which provides an n-bit bit group ($X_j$ to $X_{j+n-1}$) to the networks ($N_1$ to $N_{n-k}$) on each pulse of the bit clock (C).

7. A system as claimed in claim 6, characterized in that each network ($N_i$) is fed only with those bits of the n-bit bit group ($x_j$ to $x_{j+n-1}$) for which the associated parity check matrix components to be used in the network ($N_i$) are nonzero.

8. A system as claimed in claim 7, characterized in that those networks ($N_i$) whose necessary number ($M_i$)

of stages ($ST_1$ to $ST_4$) is less than the maximum number of stages required in any of the networks have additional stages including delay elements ($E_2$), so that all networks ($N_1$ to $N_{n-k}$) provide their components ($S_i$) of the syndrome ($S_1$ to $S_{n-k}$) at their outputs simultaneously.

**Revendications**

1. Système de transmission d'informations multiplex dans le temps présentant un dispositif d'émission qui insère régulièrement dans la séquence binaire à transmettre un mot à n bits qui est codé dans un code de bloc linéaire, et présentant un dispositif de contrôle côté réception, qui recherche dans la séquence binaire reçue le mot à n bits, en vérifiant si les groupes binaires présentant n bits successifs sont codés dans le code de bloc,
caractérisé en ce que
le dispositif de contrôle (SR1, SR2, $N_1$ à $N_{n-k}$, LS) vérifie l'un après l'autre tous les groupes binaires à n bits ($X_j$ à $X_{j+n-1}$) commençant par l'un ($X_j$) des bits successifs de la séquence binaire reçue.

2. Système selon la revendication 1, caractérisé en ce que le dispositif de contrôle calcule le syndrome ($S_1$ à $S_{n-k}$) pour chaque groupe binaire à n bits à vérifier, sur la base de la matrice de contrôle de parité du code de bloc linéaire utilisé et, si le syndrome est égal à zéro, émet un signal indiquant la présence d'un mot à n bits.

3. Système selon la revendication 2, caractérisé en ce que le dispositif de contrôle comporte :

   - pour chaque composant (Si) du syndrome ($S_1$ à $S_{n-k}$) un réseau ($N_i$), qui calcule à partir du groupe binaire à n bits ($X_j$ à $X_{j+n-1}$) à vérifier un composant ($S_i$) du syndrome ($S_1$ à $S_{n-k}$).
   - un circuit logique (LS), qui détermine sur la base des composants calculés du syndrome ($S_1$ à $S_{n-k}$), si le syndrome est égal à zéro, et
   - un circuit de temporisation (SR2), qui retarde la séquence binaire reçue jusqu'à ce que la vérification d'un groupe binaire à n bits soit terminée.

4. Système selon la revendication 3, caractérisé en ce que le traitement se fait à l'intérieur du dispositif complet de contrôle en cycle binaire (C) de la séquence de bits reçues.

5. Système selon la revendication 4, caractérisé en ce qu'un groupe binaire à n bits ($X_j$ à $X_{j+n-1}$) à vérifier dans le dispositif de contrôle est entré simultanément et parallèlement dans chacun des réseaux ($N_i$), et en ce que chaque réseau calcule ses composants ($S_i$) du syndrome ($S_1$ à $S_{n-k}$) par chaînages de OU EXCLUSIF de ses bits d'entrée suivant la matrice de contrôle de parité en plusieurs niveaux successifs.

6. Système selon la revendication 5, caractérisé en ce que la séquence binaire reçue parcourt un registre à décalage (SR1) à ($n_{-1}$ bits), qui prépare avec chaque impulsion du cycle binaire (C) un groupe binaire à n bits ($X_j$ à $X_{j+n-1}$) à vérifier pour les réseaux ($N_1$ à $N_{n-k}$).

7. Système selon la revendication 6, caractérisé en ce que dans chaque réseau ($N_i$) ne sont entrés que les bits du groupe binaire à n bits ($X_j$ à $X_{j+n-1}$) pour lesquels les composants de la matrice de contrôle de parité correspondants à utiliser dans le réseau ($N_i$) sont différents de zéro.

8. Système selon la revendication 7, caractérisé en ce que les réseaux ($N_i$), dont le nombre ($M_i$) nécessaire de niveaux ($ST_1$ à $ST_4$) est inférieur au nombre de niveaux maximum nécessaire dans l'un des réseaux, ont en plus des niveaux nécessaires, d'autres niveaux présentant des éléments de temporisation ($E_2$), de sorte que tous les réseaux ($N_1$ à $N_{n-k}$) préparent simultanément, à leurs sorties, leurs composants ($S_i$) du syndrome ($S_1$ à $S_{n-k}$).

EP 0 407 903 B1

Takt
C

SR1

SR2

$x_{j+n-1}$ $x_{j+n-2}$ $x_{j+n-3}$ $\cdots$ $x_{j+1}$ $x_j$

n

$N_1$

$N_{n-k}$

$\cdots$

$S_1$

$S_{n-k}$

LS

FIG.1

FIG.2

FIG.3

FIG.4